# EUROPÄISCHE PATENTSCHRIFT

(11) **EP 2 342 468 B1**
(45) Veröffentlichungstag und Bekanntmachung des Hinweises auf die Patenterteilung: **31.08.2016**
(21) Anmeldenummer: 09744595.1
(22) Anmeldetag: 21.09.2009
(51) Int. Cl.: F16B 5/01, F16B 13/12, F16B 13/08, F16B 13/14

(54) **DÜBEL MIT EINEM MEHRKAMMER-KLEBSTOFFBEHÄLTER**
DOWEL COMPRISING A MULTI-CHAMBER ADHESIVE CONTAINER
CHEVILLE COMPORTANT UN RÉSERVOIR DE COLLE À CHAMBRES MULTIPLES

(30) Priorität: 22.09.2008 DE 102008048354
(43) Veröffentlichungstag der Anmeldung: 13.07.2011
(73) Patentinhaber: Zimmer, Günther, 77866 Rheinau (DE); Zimmer, Martin, 77866 Rheinau (DE)
(72) Erfinder: WALZ, Rüdiger, 72149 Neustetten (DE)
(74) Vertreter: Thämer, Wolfgang
(86) Internationale Anmeldenummer: PCT/DE2009/001303
(87) Internationale Veröffentlichungsnummer: WO 2010/031392

(56) Entgegenhaltungen:
- DE-A1-102006 049 954
- DE-A1-102008 010 730
- DE-U1- 20 002 016

## Beschreibung

Die Erfindung betrifft einen Dübel zur Verwendung in einer mit einer oberen und unteren Deckplatte ausgestatteten Leichtbauplatte aus einem mit einem Boden versehenen Zylinderkörper, einem Verdrängerkörper und einem mit Sollbruchstellen ausgestatteten Klebstoffbehälter, wobei der Zylinderkörper mindestens zwei Hintergriffselemente aufweist, die durch das Einschieben des Verdrängerkörpers in eine Bohrung der Leichtbauplatte, die obere Deckplatte hintergreifend, aufgespreizt werden und wobei der Klebstoffbehälter in einem mit mehreren Öffnungen versehenen Innenraum des Zylinderkörpers sitzt.

Die Leichtbauplatten, oft auch als Sandwichplatten oder Wabenplatten bezeichnet, haben im Möbelbau in der Regel formsteife Decklagen aus Dünnspanplatten, mittel- oder hochdichten Faserplatten, Sperrholz- oder Hartfaserplatten. Die Sandwichplatten haben dabei als Mittelschicht bzw. Stützkern z.B. PolyurethanSchaum oder Polystyrol. Bei den Wabenplatten werden als Zwischenlagen oft Wellstegeinlagen oder sog. expandierte Honigwaben eingesetzt. Die meisten Leichtbauplatten haben eine Rohdichte, die unter 500 kg/m³ liegt. Werden für die Zwischenlage keine brandhemmenden Aluminiumschäume oder Blähglas verwendet, liegt die Rohdichte unter 350 kg/m³. Zum Vergleich beträgt die Rohdichte einer unbeschichteten Spanplatte ca. 600 bis 750 kg/m³.

Sollen an Leichtbauplatten Beschläge, z.B. durch Anschrauben, befestigt werden, hat man das Problem, dass die Befestigungsmittel in der Regel nur an der relativ dünnen oberen Decklage bzw. Deckplatte Halt finden.

Dazu wird in der DE 10 2008 010 730 A1 ein mindestens zweiteiliger Dübel beschrieben, bei dem mindestens zwei größere Dübelbauteile während der Dübelmontage ineinander geschoben werden. Ein zumindest bereichsweise topfförmiges Bauteil hat hierbei die Funktion eines Zylinders, während ein zapfenartiges Bauteil die Funktion eines Kolbens übernimmt. Im Boden des topfförmigen Bauteils liegt eine Klebstoffpatrone, die beim Zusammenschieben der beiden genannten Dübelbauteile oben und unten aufreißt.

Der vorliegenden Erfindung liegt das Problem zugrunde, einen Klebedübel für Leichtbauplatten zu entwickeln, der bei einfacher Montage fest, sicher und dauerhaft in der Leichtbauplatte hält.

Das Problem wird mit den Merkmalen des Anspruchs 1 gelöst. Der Klebstoffbehälter weist mindestens zwei voneinander getrennte Kammern auf. Er hat eine obere Öffnung, eine untere Öffnung und einen zerstörbaren Zwischenboden, wobei die obere und die untere Öffnung jeweils mit einer dünnwandigen, zerstörbaren Folien verschlossen ist.

Mit der Erfindung wird ein sog. hydraulischer Klebedübel vorgestellt, der im Prinzip wie eine Zylinder-Kolben-Einheit aufgebaut ist. Im Handelszustand ist der Zylinder mit einem in einem Mehrkammerbehälter bevorrateten fließfähigen Klebstoff befüllt. Wird nun der Klebedübel in eine Bohrung einer Leichtbauplatte gesteckt und dort der Verdrängerkörper in den Zylinderkörper geschoben, wird zunächst die obere Kammer des Klebstoffbehälters oben durch den Verdrängerkörper aufgestoßen. Der in die obere Kammer eindringende Verdrängerkörper verdrängt den Klebstoff entgegen der Bewegungsrichtung des Verdrängerkörpers in den Bereich unterhalb der oberen Deckplatte. Bei der weiteren Vorwärtsbewegung des Verdrängerkörpers drückt dieser den Klebstoffbehälter so gegen den Zylinderboden, dass die untere Kammer des Klebstoffbehälters unten aufreißt. Der Verdrängerkolben schiebt nun einen restlichen Klebstoff durch Öffnungen des unteren Zylinderbereichs in den um das untere Dübelende gelegenen Bereich. Bei der Vorwärtsbewegung des Verdrängerkörpers wird der noch fließfähige Klebstoff über Bohrungen oder Kanäle dorthin geleitet, wo er zum Halten des Dübels in der Leichtbauplatte benötigt wird. Nach dem teleskopartigen Zusammenschieben des Zylinderkörpers und des Verdrängerkörpers härtet der Klebstoff aus und fixiert den Dübel dauerhaft in der Leichtbauplatte.

In die z.B. aus zäh elastischem Kunststoff gefertigte Einheit kann dann, auch schon während des Aushärtens, eine Schraube eingedreht werden.

Weitere Einzelheiten der Erfindung ergeben sich aus den Unteransprüchen und den nachfolgenden Beschreibungen schematisch dargestellter Ausführungsformen.
- Figur 1:: Perspektivische Darstellung des Dübels in der Handelsform;
- Figur 2:: wie Figur 1, jedoch von schräg unten;
- Figur 3:: wie Figur 1, jedoch von schräg oben;
- Figur 4:: Perspektivische Darstellung der Dübelshülse;
- Figur 5:: wie Figur 4, jedoch von schräg unten;
- Figur 6:: wie Figur 4, jedoch von schräg oben;
- Figur 7:: Perspektivische Darstellung des Verdrängerkörpers;
- Figur 8:: wie Figur 7, jedoch von schräg unten;
- Figur 9:: Perspektivische Darstellung des Dübelbodens;
- Figur 10:: wie Figur 9, jedoch von schräg unten;
- Figur 11:: wie Figur 1, jedoch im Längsschnitt;
- Figur 12:: wie Figur 11, jedoch nach dem ersten Schritt des Einschiebehubs;
- Figur 13:: wie Figur 12, jedoch nach dem zweiten Schritt des Einschiebehubs;
- Figur 14:: wie Figur 13, jedoch nach dem dritten Schritt des Einschiebehubs;
- Figur 15:: wie Figur 14, jedoch mit um 45 Winkelgrade gedrehten Dübel;
- Figur 16:: Längsschnitt durch die Bohrung der Leichtbauplatte mit eingelegtem Zylinderkörper ohne Boden;
- Figur 17:: Mehrkammerklebstoffbehälter mit mittigem Zwischenboden, vergrößert;
- Figur 18:: unterer Teil eines Mehrkammerklebstoffbehälter mit außermittigem Zwischenboden, vergrößert;
- Figur 19:: Unteransicht zu Figur 18, jedoch mit Kerben in der Behälterwandung und im Zwischenboden.

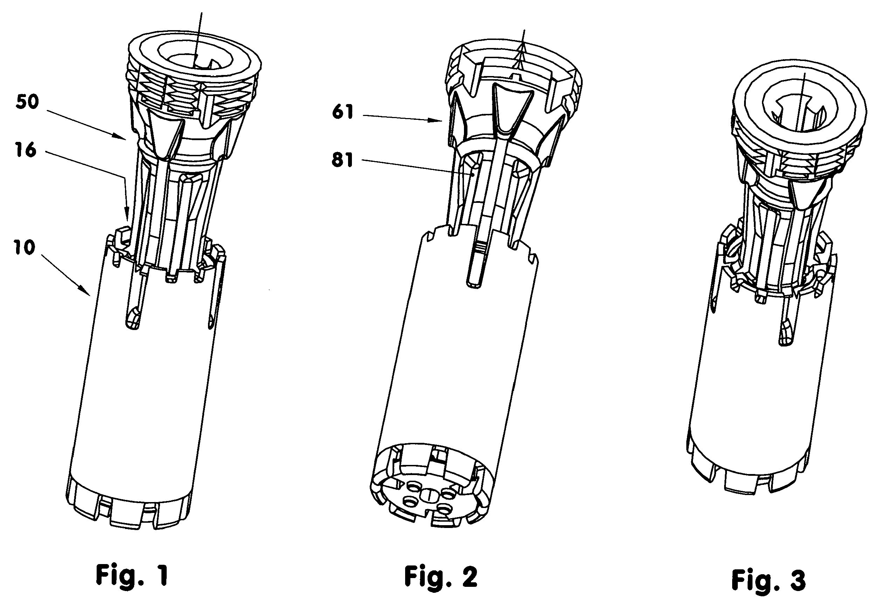

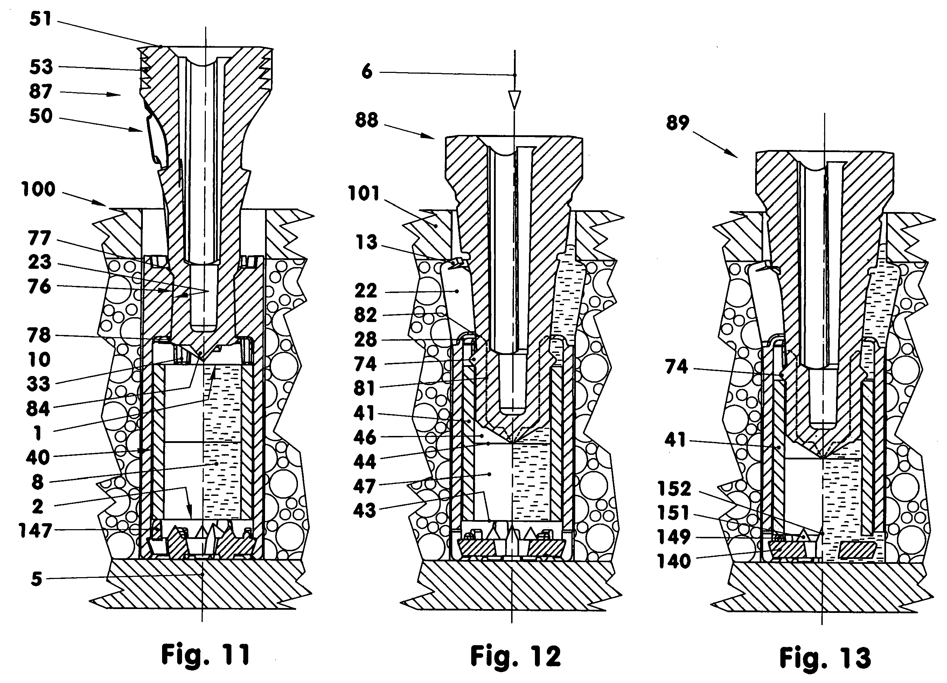

Die Figuren 1 bis 3 zeigen einen Dübel in drei Ansichten. Der Dübel ist im Handelszustand dargestellt. Dazu steckt im Zylinderkörper (10) des Dübels ein teilweise in die Ausnehmung (16) des Zylinderkörpers (10) eingeschobener Verdrängerkörper (50). Zwischen dem Verdrängerkörper (50) und dem Zylinderkörper (10) ist ein Klebstoffbehälter (40), hier eine Klebstoffpatrone, vgl. Figur 11, eingeschlossen.

Die Figur 11 zeigt den Dübel nach den Figuren 1 bis 3 - geringfügig abgeändert - im Längsschnitt. Sein Zylinderkörper (10) steckt dabei in einer Leichtbauplatte (100) ohne Riegel und feste Einlagen.

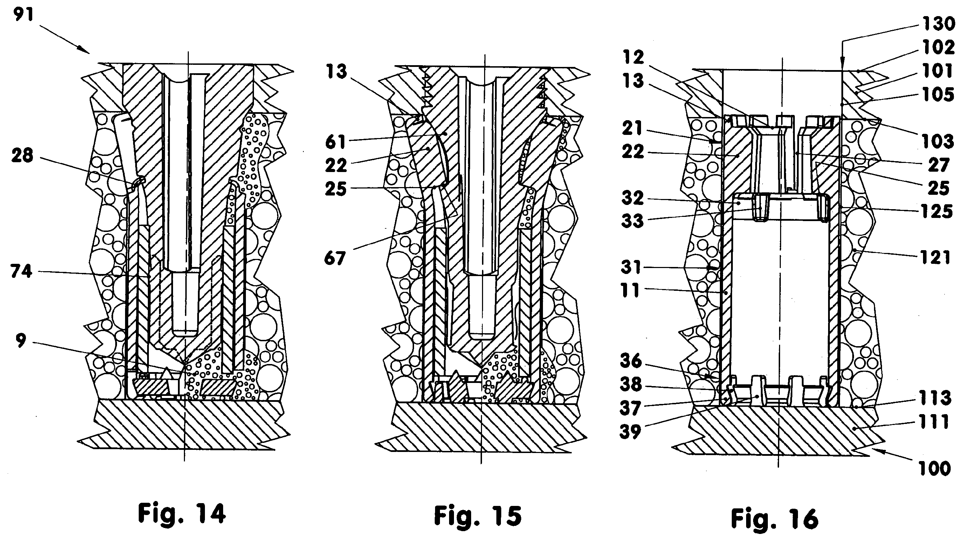

Die in Figur 16 gezeigte Leichtbauplatte (100) umfasst zwei Deckplatten (101) und (111) und einen dazwischen liegenden Stützkern (121). Jede Deckplatte (101, 111) besteht im Ausführungsbeispiel aus einer Dünnspanplatte. Der Stützkern (121) ist hier z.B. ein PU-Schaumkern. Die Deckplatten (101, 111) sind mit ihren innen liegenden Oberflächen (103, 113) mit dem plattenförmigen Stützkern (121) verklebt. Die dargestellte Leichtbauplatte hat eine Wandstärke von 20 bis 40 Millimetern. Jede Deckplatte ist z.B. 2 bis 8 Millimeter dick. Statt des Schaumkerns kann sie u.a. auch einen Wabenkern haben. In der Leichtbauplatte (100) befindet sich eine Bohrung (130), die sich aus den Abschnitten (105) und (125) zusammensetzt.

Die Leichtbauplatte (100) kann auch gewölbt, z.B. zylindrisch oder sphärisch, ausgeführt sein, sofern die Materialstärke des Stützkerns (121) zumindest annähernd konstant ist.

Um den Klebedübel montieren zu können, wird die erste Deckplatte (101) und der Stützkörper (121) auf- bzw. durchbohrt. Als Bohrwerkzeug wird beispielsweise ein Spiralbohrer benutzt, der einen Spitzenwinkel von 180 Winkelgraden aufweist. Ggf. kann auch ein Stirnsenker verwendet werden. Je nach Dübelbauart kann die Bohrung (130) auch mit einem Stufensenker gebohrt werden. Die entstandene Ausnehmung, bzw. Bohrung (130), wird beispielsweise mit Pressluft freigeblasen oder leergesaugt.

Der Zylinderkörper (10) ist zusammengebaut ein topfförmiges Bauteil, das aus einem Rohrabschnitt (11) und einem Boden (140) besteht. Im Ausführungsbeispiel sitzt der Boden (140) verklemmt im Rohrabschnitt (11).

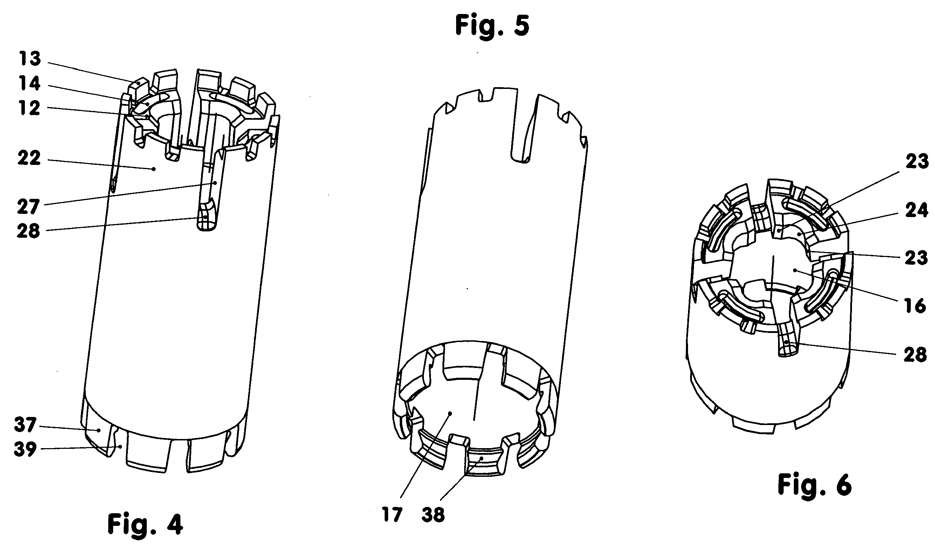

Der Rohrabschnitt (11) nach Figur 16, er ist beispielsweise aus dem Kunststoff ABS gefertigt, hat eine zumindest annähernd zylindrische Außenwandung. Sie verjüngt sich um einige Zehntel Winkelgrade nach oben hin. Der Rohrabschnitt (11) besteht aus drei größeren Bereichen. Der erste Bereich ist der Hintergriffsbereich (21). Er ist im Ausführungsbeispiel mit vier z.B. geraden Längsschlitzen (27) ausgestattet, vgl. Figuren 4 und 6. Die Längsschlitze (27) separieren vier z.B. gleichgroße Hintergriffselemente (22).

Jedes Hintergriffselement (22) besteht primär aus einem Block mit trapezförmigem Längsschnitt, vgl. Figur 16, der über eine schmale, dünnwandige Gelenkzone (32) mit dem zweiten Bereich (31) des Rohrabschnitts (11) verbunden ist. Die Innenwandung der einzelnen Hintergriffselemente (22) umfasst zwei Stützflächen (23) und einen dazwischen liegenden Kanal (24), vgl. Figur 6. Die Stützflächen (23) sind Teilflächen eines Kegelstumpfmantels, dessen Kegelwinkel ca. 4 Winkelgrade misst. Die theoretische Spitze des Kegels liegt nach Figur 16 weit oberhalb der oberen Stirnfläche (12) des Rohrabschnitts (11). Der mittlere Durchmesser des Kegelstumpfmantels im Bereich der Stützflächen (23) entspricht z.B. dem halben maximalen Durchmesser der Außenwandung des Rohrabschnitts (11).

Die zwischen den Stützflächen (23) gelegenen Kanäle (24) haben einen Krümmungsradius von ca. 1 mm. Die Tiefe der Kanäle (24), gemessen gegenüber dem theoretischen Kegelstumpfmantel der Stützflächen (23), beträgt z.B. 0,3 bis 0,4 mm.

Die Hintergriffselemente (22) haben auf den Stirnflächen (12) eine Struktur, die u.a. nach oben ragende Zinnen (13) und sickenartige Vertiefungen (14) aufweist. Die drei Zinnen (13) pro Hintergriffselement (22) sind bündig mit der Außenwandung. Sie haben eine mittlere Wandstärke von ca. 0,5 mm. Hinter jeder mittleren Zinne (13) liegt die Vertiefung (14). Die Länge der Vertiefung (14) ist ca. doppelt so lange wie die Länge einer Zinne (13). Die Vertiefung (14) hat die Aufgabe, ein nach innen Abknicken der mittleren Zinne (13) zu erleichtern.

Das untere Ende der einzelnen Längsschlitze (27) hat eine besondere Ausgestaltung, vgl. Figur 12. Dort ist eine schmale, ca. 0,3 mm dicke, elastische Dichtzunge (28) angeformt, die um 90 Winkelgrade nach innen gebogen ca. 1 mm - zumindest annähernd horizontal - in den Innenraum (17) hineinragt.

Zwischen der Stirnfläche (12) und den Stützflächen (23) sowie den Kanälen (24) befindet sich z.B. eine 0,6x45°-Fase, an der nach Figur 11 bereichsweise der Verdrängerkörper (50) mit seinen Sperrflächen (77) anliegt.

Der zweite Bereich (31) des Rohrabschnitts (11) ist das Patronenlager. Dieser Bereich (31) hat eine zumindest annähernd zylindrische Innenwandung, die sich nach unten hin, vgl. Figur 16, geringfügig verbreitert. Die Wandung hat dort eine mittlere Wandstärke von z.B. 0,8 mm.

Im Bereich der Gelenkzone (32) sind vier zumindest annähernd quaderförmige Anschläge (33) angeformt, die um ca. 0,5 mm von der Innenwandung nach innen abstehen. Sie sind zwischen den Längsschlitzen (27) angeordnet. An ihren Unterkanten liegt der Klebstoffbehälter (40) an, vgl. Figur 11.

Der dritte Bereich (36) des Rohrabschnitts (11) ist der Bodenarretierbereich. Er besteht aus z.B. acht nach unten ragenden elastischen Zungen (37), vgl. auch Figuren 4 und 5, die durch kurze Längsschlitze (39) voneinander getrennt sind. An der Innenwandung der Zungen (37) befindet sich - auf den unteren beiden Dritteln der Zungen - eine Eindrehung (38), deren Hüllfläche einem Kegelstumpfmantel entspricht. Der Kegelstumpfmantel hat einen Kegelwinkel von 40 Winkelgraden. Die theoretische Spitze des Kegelstumpfmantels befindet sich - bei montiertem Dübel - unterhalb der unteren Deckplatte (111). Die Eindrehung (38) dient als Sitz für den Zylinderboden (140), vgl. Figuren 11 bis 15.

Der z.B. aus ABS gefertigte Zylinderboden (140) ist im Wesentlichen eine Scheibe mit einer großteils kegelstumpfförmigen Außenwandung (141). Er hat eine zentrale, ovale Ausnehmung (143). An seiner Unterseite (155) trägt er vier kegelstumpfförmige Füße (156), die jeweils ca. 0,4 mm lang sind.

An seiner Oberseite (144) weist der Boden (140) drei große Abbrechzapfen (147), drei nierenförmige Stützfüße (149), vier spitze Dorne (151) und zwei scharfkantige, liegende Prismen (152) auf.

Die einzelnen, zumindest annähernd quaderförmigen Abbrechzapfen (147) sitzen am Rand des Bodens (140). Sie sind über je zwei Bruchstege (148) in viereckigen, trapezförmigen Aussparungen (142) des Bodens (140) angeformt. Die angeformten Abbrechzapfen (147) ragen ca. 1,5 mm nach oben über die Oberseite (144) über. Die Bruchstege (148) selbst haben eine Wandstärke von 0,1 mm.

Die drei nierenförmigen Stützfüße (149) sind 0,5 mm hoch. Sie sitzen im Randbereich des Bodens (140) zwischen den Abbrechzapfen (147). Die kegelförmigen Dorne (151) haben eine Höhe von 1 mm und einen Spitzenwinkel von 60 Winkelgraden. Sie liegen auf den Ecken eines Quadrats, das die ovale Ausnehmung (143) umgibt. An die Längsseiten dieser Ausnehmung (143) schließt sich jeweils ein Prisma (152) an. Die jeweilige Spitze des einzelnen Prismas (152) liegt ca. 1,2 mm oberhalb der Oberseite (144).

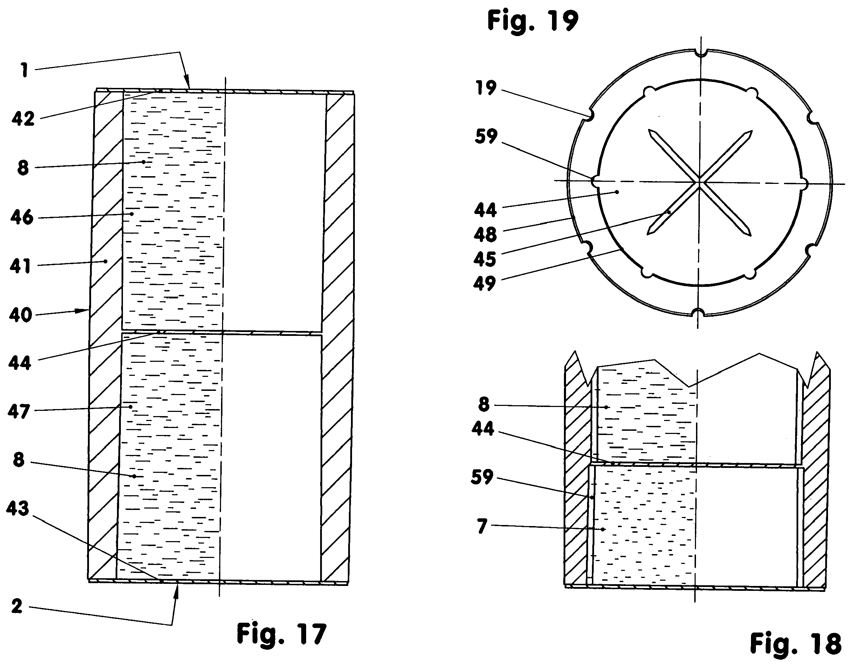

Die Klebstoffpatrone (40) ist im Wesentlichen ein zylindrisches Rohr (41), das an seinen beiden Enden jeweils eine mit einer Deckfolie (42, 43) verschließbare Öffnung (1, 2) hat, vgl. Figuren 17 und 18. Nach Figur 17 ist die Klebstoffpatrone (40) mittig durch einen Zwischenboden (44) geteilt, wodurch zwei Klebstoffkammern (46, 47) entstehen. Die Deckfolien (42, 43) und der Zwischenboden (44) sind normal zur Mittellinie (5) ausgerichtet. Die Deckfolien sind PE-beschichtete Aluminiumfolien. Die Aluminiumfolie (42, 43) stellt als Ganzes eine Sollbruchstelle dar. Ggf. kann sie jedoch auch spezielle Perforationen oder kerbenartige Dünnstellen geringerer Reißfestigkeit aufweisen. In Figur 19 ist für den Zwischenboden (44) eine kerbenartige, z.B. kreuz- oder x-förmige Dünnstelle (45) dargestellt. Die Schwächung des Zwischenbodens (44) beträgt hier ca. 50 Prozent der übrigen Wandstärke des Zwischenbodens (44).

Die Deckfolien (42, 43) und der Zwischenboden (44) haben eine Wandstärke von z.B. 0,1 bis 0,2 Millimeter. Ihre Reißfestigkeit liegt jeweils unter 10 N/mm². Werden bei den Deckfolien (42, 43) und dem Zwischenboden (44) zusätzliche Perforationen oder Dünnstellen verwendet, bezieht sich die Reißfestigkeit auf diese diskreten Sollbruchstellen. Die Reißfestigkeit ist so gewählt, dass der Verdrängerkörper (50) die Teile (42-44) problemlos durchstoßen kann.

Das Rohr (41) ist aus PE-HD, z.B. Hostalen^{®} GC 7260, gefertigt, einem Werkstoff, an dem der verwendete Klebstoff (8) kaum haftet und dessen Wasseraufnahme unter 0,1 Prozent liegt. Es hat z.B. einen Außendurchmesser von 8 mm und eine Wandstärke von z.B. 0,9 mm. Es ist pro Kammer mit ca. 0,15 bis 0,3 Milliliter Klebstoff (8) befüllt.

Nach Figur 17 verjüngen sich die zumindest annähernd zylindrischen Außen- (48) und die Innenwandung (49) vom Zwischenboden aus zu den Öffnungen (1, 2) hin. Unter zumindest annähernd zylindrisch wird eine Winkelabweichung der Wandung von bis zu drei Winkelgraden toleriert. Gemäß der Figuren 18 und 19 haben die Wandungen (48, 49) jeweils z.B. sechs Kerben (19) und (59). Die Kerben (19, 59) verhindern nach der Dübelmontage, wenn der Klebstoff (9) vollständig ausgehärtet ist, dass sich der Verdrängerkörper (50) und der Zylinderkörper (10) im Bereich des Rohres (41) nicht gegeneinander verdrehen können. Der ausgehärtete Klebstoff (9) verhindert dies formschlüssig.

Mit Hilfe des Zwischenbodens (44) kann der Klebstoff (8) gezielt vor die obere (101) und die untere Deckplatte (111) verteilt werden. Soll der Klebstoff (8) z.B. asymmetrisch verteilt werden, kann der Zwischenboden (44) entsprechend versetzt angeordnet werden, vgl. Figur 18.

Der Klebstoff ist beispielsweise ein einkomponentiger feuchtigkeitshärtender Reaktionskleber auf Polyurethanbasis. Durch den Einfluss von Feuchtigkeit härtet der Klebstoff, unter leichtem Aufschäumen, zu einem wasserfesten, zähharten Klebstofffilm aus. Die Abbindezeit liegt bei einer Raumtemperatur von 20°C bei fünf bis fünfzehn Minuten. Die Viskosität beträgt 7000 ± 2000 mPA*s.

Alternativ kann der Klebstoffbehälter (40) auch mit einem feuchtigkeitshärtenden Einkomponenten-Reaktionsklebstoff auf Isocyanat-Basis befüllt sein.

Ggf. sind dem Klebstoff dünne, kurze Kunststofffasern beigemengt. Die Kunststofffasern sind jeweils kürzer als ein Millimeter. Sie haben einen Durchmesser von ca. 40 Mikrometer. Der Volumenanteil der Kunststoffasern beträgt mindestens 15 Prozent.

Es besteht auch die Möglichkeit, die untere Kammer (47) nicht mit einem Klebstoff (8), sondern mit einem Holzverfestiger (7), z.B. einem feuchtigkeitsvernetzenden Einkomponentenmittel auf Polyurethan-Basis zu befüllen.

In diesem Fall verteilt sich der Holzverfestiger auf der Oberfläche (113) der unteren Deckplatte (111). Er fließt aus der Kammer (47) aus, noch bevor der Zwischenboden (44) vom Verdrängerkörper (50) durchstoßen wird. Der Holzverfestiger bzw. Holzverdichter ist eine niederviskose Flüssigkeit mit großer Tiefenwirkung. Er dringt in die oberen Schichten der unteren Deckplatte (111), die aus Holz oder einem Holzfaserstoff gefertigt ist, ein. Dabei erhöht sich die Grundfestigkeit der Deckplatte (111) um mehr als das Doppelte.

Alternativ kann die untere Kammer (47) auch eine Holzversiegelung auf Polyurethan-Basis enthalten.

Der einteilige, z.B. aus dem Kunststoff ABS gefertigte Verdrängerkörper (50) weist außen vier größere Zonen auf, eine obere Klemmzone (52), eine Keilzone (61), eine Rückströmzone (65) und eine untere Haltezone (75). Durch die oberen drei Zonen erstreckt sich eine zentrale Ausnehmung (85), die in der unteren Haltezone (75) endet.

Die obere Klemmzone (52), sie steckt nach der Montage verklemmt in der Bohrung (105) der oberen Deckplatte (101), hat zumindest annähernd eine zylindrische Form. Die Außenwandung dieser Form ist stark strukturiert. Sie hat beispielsweise vier Umlaufkerben (54) zwischen fünf zumindest teilweise geschlossenen, umlaufenden Umlaufstegen (53), die durch z.B. 12 am Umfang äquidistant verteilte vertikale Klemmstege (55) unterbrochen werden. Neben jedem dritten Klemmsteg (55) befindet sich eine vertikale Kerbe (56), die die beiden unteren unterbricht. Die Kerben (56) sind um ca. 30% tiefer als die Umlaufkerben (53). Die Kerben (56) münden in die anschließende Keilzone (61).

Von oben her gesehen, vgl. Figur 11, haben der 2. bis 5. Umlaufsteg (53) einen um 0,3 mm kleineren Durchmesser als der obere, 1. Umlaufsteg (53). Der Durchmesser des 1. Umlaufstegs ist um 0,8 mm größer als die Bohrung (105). Zudem ist der 1. Umlaufsteg (53) von der Stirnfläche (51) aus angefast, so dass seine äußere Kante ca. 0,15 mm tiefer liegt als die Ebene der oberen Stirnfläche (51).

Im Bereich der Keilzone (61) verjüngt sich der Verdrängerkörper (50) um ca. 44% seines Außendurchmessers. Der Kegelwinkel entspricht 64 Winkelgraden. Auf der kegelstumpfförmigen Oberfläche der Keilzone (61) sind vier äquidistant verteilte Keilelemente (62) angeformt. Diese, sich nach unten zuspitzenden Keilelemente (62), haben eine plane Oberfläche (63) und sind um z.B. 6 Winkelgrade gegen die Mittellinie (5) geneigt, wobei die jeweiligen Spitzen der Keilelemente (62) den kürzesten Abstand zur Mittellinie (5) haben.

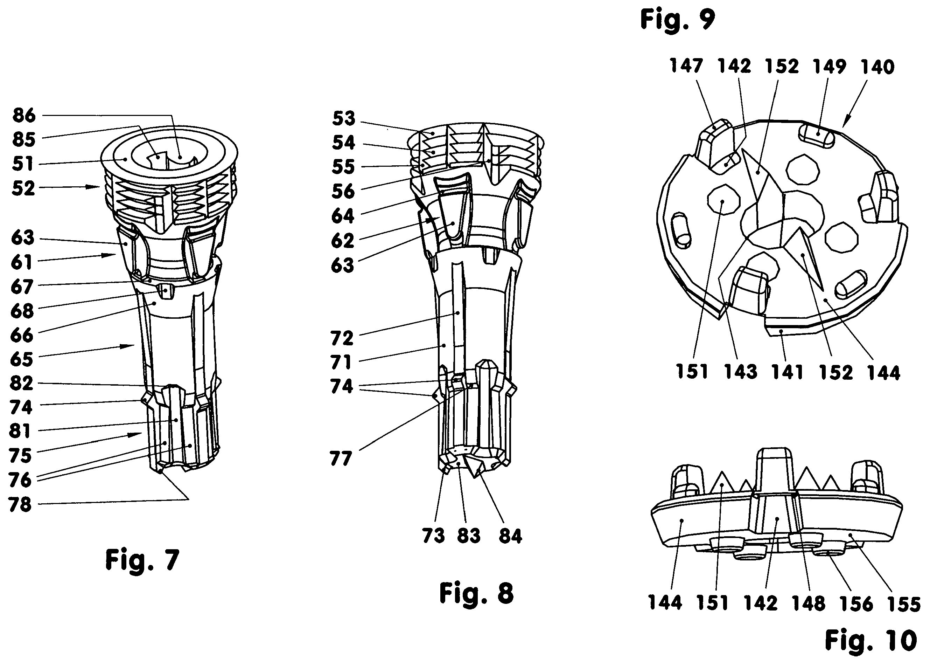

Bei einem montierten Dübel sitzen die Keilelemente (62) in den gespreizten Längsschlitzen (27) zwischen den Hintergriffselementen (22), wobei sich die unteren Spitzen der Keilelemente (62) im Grund der v-förmig aufgedehnten Längsschlitze (27) befinden. An ihren seitlichen Wandungen liegen dann die Seitenflanken der Hintergriffselemente (22) verdrehsichernd und beispielsweise dicht an. Jede Oberfläche (63) hat nach den Figuren 7 und 8 zusätzlich eine horizontale Kerbe (64), deren Kerbfläche eine Mantelteilfläche eines Torus ist. Die jeweilige Kerbe (64) unterstützt das formschlüssige Hintergreifen des unter die obere Deckplatte (103) geströmten, ausgehärteten Klebstoffs (9).

Unterhalb der Keilzone (61) befindet sich die Rückströmzone (65). Der mittlere Bereich dieser Rückströmzone (65) ist ein Zylinderabschnitt (71), an dem vier äquidistant auf dem Umfang verteilte Verdrehsicherungsstege (72) angeordnet sind. Die Verdrehsicherungsstege (72) beginnen an der Spitze der Keilelemente (62), vgl. Figuren 1 bis 3, und enden an der unteren Stirnfläche (83) des Verdrängerkörpers (50), vgl. Figuren 7 und 8. Im Bereich des Zylinderabschnitts (71) bildet die Außenwandung des einzelnen Verdrehsicherungsstegs (72) eine Keilfläche, die gegenüber der Mittellinie (5) einen Winkel von ca. 4 Winkelgraden einnimmt.

In den Figuren 7 und 8 befindet sich am Übergang der Zonen (61) und (65) ein kegelstumpfmantelförmiger Sperrring (66), dessen oberer Bereich die Verdrehsicherungsstege (72) überbrückt. Der Sperrring (66) hat einen Kegelwinkel von 30 Winkelgraden. Die theoretische Spitze des Kegelmantelstumpfes liegt auf der Mittellinie (5) im Bereich der Haltezone (75). Zu den Keilelementen (62) hin hat der Sperrring (66) eine ebenfalls kegelmantelstumpfförmige Stützfläche (67). Ihr Kegelwinkel beträgt z.B. 150 Winkelgrade, wobei die gedachte Kegelspitze in der Keilzone (61) liegt.

Der Sperrring (66) hat vier kurze kanalartige Ausnehmungen (68). In sie greifen bei der Montage die Anschläge (33) des Rohrabschnitts (11) ggf. formgenau ein.

Der unterste Bereich des Verdrängerkörpers (50) ist die Haltezone (75). In ihr setzen sich die Verdrehsicherungsstege (72) nach unten hin fort. Sie haben dort plane, zur Mittellinie (5) parallele Außenflächen, die teilweise über die untere Stirnfläche (83) hinausragen und in schneidenförmigen Spitzen (73) enden. Die einander diagonal gegenüberliegenden Außenflächen haben ein Abstand, der geringfügig kleiner ist als der Innendurchmesser des Rohres (41) der Klebstoffpatrone (40). Am Übergang zwischen der Rückströmzone (65) und der Haltezone (75) weist jeder Verdrehsicherungssteg (72) eine radial nach außen abstehende Rastnase (74) auf, vgl. auch Figuren 12 und 13. Jede Rastnase (74) hat eine Vorder- und eine Rückflanke. Beide Flanken schließen einen rechten Winkel ein, wobei die Ebene der Vorderflanke die Mittellinie (5) unter 45 Winkelgraden schneidet. Der maximale Abstand zweier einander gegenüberliegender Rastnasen (74) ist ca. 0,8 mm größer als der Innendurchmesser des Rohres (41), vgl. Figur 12.

Zwischen den Verdrehsicherungsstegen (72) liegen die Halteflächen (76). Ihre Hüllfläche hat die Form eines Kegelstumpfmantels, der einen Spitzenwinkel von z.B. 4 Winkelgraden hat und dessen gedachte Spitze oberhalb der oberen Stirnfläche (51) liegt. Nach Figur 11 kontaktieren die Halteflächen (76) des Verdrängerkörpers (50) die Stützflächen (23) des Zylinderkörpers (10). An den oberen Enden der Halteflächen (76) sind Sperrflächen (77) angeordnet. Auch sie sind Teile eines Kegelstumpfmantels. Er hat hier einen Spitzenwinkel von z.B. 90 Winkelgraden, wobei die gedachte Spitze im Bereich der Haltezone (75) liegt.

An den unteren Enden der Halteflächen (76) befinden sich ca. 0,3 mm radial nach außen abstehende Rastvorsprünge (78), die nach Figur 11 die Hintergriffsflächen (25) der Hintergriffselemente (22) umgreifen.

In der Mitte einer jeden Haltefläche (76) ist ein Rückströmkanal (81) eingearbeitet. Jeder der vier Rückströmkanäle (81) erstreckt sich von der unteren Stirnfläche (83) bis in den unteren Bereich der Rückströmzone (65), vgl. auch gestrichelte Darstellung der Rückströmkanäle (81) in den Figuren 12 und 13.

Der Grund der Rückströmkanäle (81) verläuft parallel zur Mittellinie (5). In den Figuren 1 bis 3 enden die Rückströmkanäle (81) erst kurz vor der Keilzone (61).

An der unteren Stirnfläche (83) ist zum Aufreißen der oberen Deckfolie (42) eine pyramidale Spitze (84) angeordnet, vgl. Figur 8. Die Grundfläche der Spitze (84) hat eine rhombusförmige Grundfläche, deren lange Diagonale 2,7-mal so lang ist wie die kurze. Die lange Diagonale misst 4,2 mm, die Höhe der pyramidalen Spitze (84) beträgt z.B. 1,1 mm.

In der oberen Stirnfläche (51) ist zur Aufnahme eines Befestigungselements eine zentrale, zumindest bereichsweise kegelstumpfmantelförmige Ausnehmung (85) angeordnet, deren Mittellinie sich mit der Mittellinie (5) deckt, vgl. Figur 7. Die Ausnehmung (85) hat drei oder mehr radial nach innen ragende Stege (86), die kurz vor der Haltezone (75) enden. Zwischen der Stirnfläche (51) und der Ausnehmung (85) befindet sich eine 0,9x45°-Fase.

Die Ausnehmung (85) hat im oberen Bereich - ohne die Stege (86) zu berücksichtigen - z.B. einen Durchmesser von 4,2 mm. Der dort zwischen den Stegen (86) liegende Inkreis hat einen Durchmesser von ca. 2 bis 3 mm, wobei die Stege (86) oben eine Breite von ca. 2,5 mm aufweisen. Die Vorderkanten der Stege (86), sie liegen am Inkreis an, verlaufen also parallel zur Mittellinie (5).

Die Befestigungselemente sind beispielsweise Spanplattenschrauben der in Millimeter angegebenen Größe 3,5 x 25 oder 4 x 25.

Selbstverständlich kann die Ausnehmung (85) auch nahezu jeden anderen Querschnitt haben, z.B. einen ovalen, einen polygonalen, einen vieleckigen, einen sternförmigen oder dergleichen. Auch kann die Ausnehmung nur die Form eines kurzen, geraden Kegels haben. In diesem Fall muss sich das Befestigungselement den größten Teil der haltenden Bohrung selbst erzeugen.

Im Ausführungsbeispiel dient die Ausnehmung u.a. der Führung des Befestigungselements, damit dieses beim Einschrauben nicht von der Mittellinie (5) wegwandert. Sie kann aber auch weggelassen werden oder nur durch einen Markierungspunkt ersetzt werden.

Zum Befestigen des Klebedübels in der Bohrung (130) der Leichtbauplatte (100) wird dieser in der Regel in einem Hub eingedrückt. Durch das Aufspreizen der Hintergriffselemente (22) und durch die Gestalt der Klemmzone (52) sitzt der Dübel auch schon vor dem entgültigen Aushärten des Klebstoffs (8) genügend fest und sicher in der Bohrung (130).

Im folgenden Text wird das Fixieren des Dübels in einzelnen separaten Schritten beschrieben, obwohl sich dieser Vorgang in nur einem einzigen, kontinuierlichen Eindrückhub abspielt. In den Figuren 11 bis 15 ist der Klebstoff (8, 9) bzw. der Klebstoffstrom - um nicht zu viele Details zu überdecken - jeweils nur auf der rechten Figurenseite dargestellt.

Die Figur 11 zeigt einen Dübel im Handelszustand, der in einem ersten Schritt in die vorgefertigte Bohrung (125) der Leichtbauplatte (100) eingesteckt ist. Der Zylinderkörper (10) liegt auf der innen liegenden Oberfläche (113) der unteren Deckplatte (111) auf. Die obere Stirnfläche (12) des Zylinderkörpers (10) liegt hierbei z.B. 0,5 mm unterhalb der innen liegenden Oberfläche (103) der oberen Deckplatte (101). Im Zylinderkörper (10) sitzt die noch verschlossene Klebstoffpatrone (40). Oberhalb der Klebstoffpatrone (40) steckt der Verdrängerkörper (50) über seine Haltezone (75) im Hintergriffsbereich (21) des Zylinderkörpers in seiner ersten Position (87). Seine pyramidale Spitze (84) berührt nicht die Klebstoffpatrone (40).

In einem zweiten Schritt wird der Verdrängerkörper (50), in Richtung der Vorwärtsbewegung (6), in den Zylinderkörper (10) hineingeschoben, bis die Rastnasen (74) am oberen Rand des Rohres (41) aufliegen, vgl. Figur 12. Die zweite Position (88) des Verdrängerkörpers (50) wurde erreicht. Zwischenzeitlich hat u.a. die Spitze (84) des Verdrängerkörpers (50) die obere Deckfolie (42) der Klebstoffpatrone (40) aufgerissen. Auch hat der in die Klebstoffpatrone (40) eingedrungene Verdrängerkörper (50) ca. 40% der fließfähigen Klebstoffmenge entgegen der Vorwärtsbewegung (6) über die Rückströmkanäle (81) nach oben verdrängt. Der noch fließfähige Klebstoff (8) hat dabei die obere Deckplatte (101) erreicht. Zeitgleich zum Verdrängungsvorgang hat die Rückströmzone (65) die Hintergriffselement (22) schon ein Stück weit aufgespreizt. Dabei haben die Zinnen (13) angefangen, zur Stirnfläche (12) der Hintergriffselemente (22) hin einzuknicken.

In einem dritten Schritt drückt der sich weiter nach unten bewegende Verdrängerkörper (50) das Rohr (41) mit einer so großen Kraft gegen den Zylinderboden (140), dass dort die anschlagartigen Abbrechzapfen (147) an ihren Bruchstegen (148), vgl. Figur 10, abreißen. Die Abbrechzapfen (147) fallen in die Aussparungen (142). Der Verdrängerkörper (50) hat seine dritte Position (89) erreicht. Durch das Nachgeben der Abbrechzapfen (147) wird die untere Deckfolie (43) unter einem Ein- bzw. Aufreißen gegen die scharfkantigen Prismen (152) und
Dorne (151) gepresst. Das Rohr (41) sitzt nun dauerhaft auf den Stützfüßen (149) auf, vgl. Figur 13.

Während des weiteren Vorwärtsbewegens des Verdrängerkörpers (50) geben die Rastnasen (74) nach. Sie werden abgeschert oder sie gleiten nun an der Innenwandung des Rohres (41) entlang, vgl. Figur 14. Hierbei wird ein Teil des Klebstoffs (8) weiterhin solange nach oben verdrängt, bis die oberen Enden (82) der Rückströmkanäle (81) den oberen Rand des Rohres (41) erreichen. Die oberen Enden (82) der Rückströmkanäle (81) wirken wie die Steuerkanten eines hydraulischen Ventils. Der Spalt zwischen dem Rohr (41) und der Wandung der Rückströmzone (65) verhindert ein Zurückströmen des noch flüssigen Klebstoffs (8). Durch die Länge der Rückströmkanäle (81) kann so zusätzlich die oben zu verpressende Klebstoffmenge gezielt gesteuert werden.

Danach wird die Restmenge des Klebstoffs (8) u.a. nur noch durch die Öffnungen (39, 142, 143) im unteren Bereich des Zylinderkörpers (10) bzw. des Bodens (140) vor die untere Deckplatte (111) verdrängt.

Dieser Vorgang ist beendet, sobald der Verdrängerkörper (50) seine vierte und letzte Position erreicht hat, vgl. Figur 14 und 15. Dann füllt der untere Teil des Verdrängerkörpers (50) fast den vollständigen Innenraum des Klebstoffbehälters (40) aus.

Nach Figur 15 sind die Hintergriffselemente (22) durch die Keilzone (61) maximal gespreizt. Die Zinnen (13) haben sich nahezu vollständig gegen die Stirnfläche (12) angelegt und drücken von unten her gegen die innen liegende Oberfläche (103) der oberen Deckplatte (101). Zugleich stützen sich die Hintergriffsflächen (25) der Hintergriffselemente (22) an der Stützfläche (67) des Sperrrings (66) ab.

Nach Figur 14 liegen die Dichtzungen (28) des Zylinderkörpers (10) unterhalb der Keilelemente (62) auf der Stützfläche (67) und verhindern dort u.a. ein Zurückfließen des Klebstoffs (8) in die unteren Bereiche des Dübels.

Während des dritten Schritts wurde die Klemmzone (52) in die Bohrung (105) eingepresst. Dabei verkrallen sich die Umlaufstege (53) in den unteren Schichten der Deckplatte (101), während sich die oberen Bereiche der Klemmstege (55) in der, in der Regel härteren, Oberflächenschicht der Deckplatte (101) einkerben. Der jeweilige Grund der Umlaufkerben (54) hat hier einen kleineren Durchmesser als die Bohrung (105), vgl. Figur 15. Über die vertikalen Kerben (56) gelangt der Klebstoff (8) zumindest teilweise in die unteren drei Umlaufkerben (54), vgl. Figur 15, so dass auch die Klemmzone (52) mit der oberen Deckplatte (101) verkleben kann.

Einige Zeit später, z.B. nach ca. 60 Sekunden, hat der Klebstoff (9) abgebunden.

Die obere Stirnfläche (51) der Klemmzone (52) liegt im Ausführungsbeispiel in der Ebene der außen liegenden Deckplattenoberfläche (102). In der Praxis liegt die Stirnfläche (51) meist ein bis zwei Zehntel Millimeter unterhalb der oben genannten Ebene.

Bei allen gezeigten Klebedübeln besteht die Möglichkeit, den Zylinderkörper (10) zu verlängern und in eine in die untere Deckplatte (111) gebohrte Sacklochbohrung hineinragen zu lassen, vgl. DE 10 2006 049 954 A1.

Die bisher beschriebenen Öffnungselemente (73, 84; 151, 152) sind spitze Kunststoffteile des Verdrängerkörpers (50) und des Bodens (140). Selbstverständlich können diese auch durch eingespritzte oder eingelegte scharfkantige Teile, wie z.B. Skalpellklingen oder dergleichen ersetzt werden.

### Bezugszeichenliste:

- 1: öffenbare Oberseite
- 2: öffenbare Unterseite
- 5: Mittellinie des Klebedübels
- 6: Vorwärtsbewegung, Dübelsetzrichtung
- 7: Holzverfestiger
- 8: Klebstoff, flüssig
- 9: Klebstoff, fest

- 10: Zylinderkörper
- 11: Rohrabschnitt, 1. Bereich
- 12: Stirnfläche, oben, hinten
- 13: Zinnen
- 14: Vertiefungen
- 16: Ausnehmung, Öffnung von (10)
- 17: Innenraum von (10)
- 19: Kerben in (11)

- 21: Hintergriffsbereich
- 22: Hintergriffselemente
- 23: Stützflächen
- 24: Kanal
- 25: Hintergriffsflächen

- 27: Längsschlitze
- 28: Dichtzungen, elastisch

- 31: Patronenlager, 2. Bereich
- 32: Gelenkzone
- 33: Anschläge, quaderförmig

- 36: Bodenarretierbereich, 3. Bereich
- 37: Zungen, Öffnungen von (10)
- 38: Eindrehungen
- 39: Längsschlitze

- 40: Klebstoffbehälter, Klebstoffpatrone
- 41: Rohr
- 42: Deckfolie, oben
- 43: Deckfolie, unten

- 44: Zwischenboden
- 45: Kerbe, Sicke, Sollbruchstelle
- 46: obere Kammer
- 47: untere Kammer
- 48: Außenwandung
- 49: Innenwandung

- 50: Verdrängerkörper
- 51: Stirnfläche, oben
- 52: Klemmzone
- 53: Umlaufstege
- 54: Umlaufkerbe
- 55: Klemmstege
- 56: Kerben, vertikal
- 59: Kerben in (49)

- 61: Keilzone
- 62: Keilelemente
- 63: Oberfläche
- 64: Kerbe

- 65: Rückströmzone
- 66: Sperrring
- 67: Stützfläche
- 68: Ausnehmung, kanalartig

- 71: Zylinderabschnitt
- 72: Verdrehsicherungsstege
- 73: Spitzen, schneidenförmig, Öffnungselement
- 74: Rastnasen

- 75: Haltezone
- 76: Halteflächen
- 77: Sperrflächen
- 78: Rastvorsprünge
- 81: Rückströmkanal
- 82: Ende eines Rückströmkanals
- 83: Stirnfläche, unten, vorn
- 84: Spitze, pyramidal; Öffnungselement
- 85: Ausnehmung, zentral
- 86: Stege, Radialstege
- 87: 1. Position
- 88: 2. Position
- 89: 3. Position
- 91: 4. Position

- 100: Sandwichplatte, Leichtkern-Verbundplatte; flächiges Bauteil in Stützkernbauweise
- 101: Deckplatte, oben
- 102: außen liegende Oberfläche
- 103: innen liegende Oberfläche
- 105: Bohrung

- 111: Deckplatte, unten
- 113: innen liegende Oberfläche

- 121: Stützkern, Wabenkern, Schaumstoffkern
- 125: Bohrung

- 130: Gesamtbohrung, Ausnehmung

- 140: Boden, Zylinderboden
- 141: Außenwandung
- 142: Aussparungen, radial; Öffnungen von (10)
- 143: Ausnehmung, oval; Öffnung von (10)
- 144: Oberseite
- 147: Abbrechzapfen; Anschlag, bodenseitig
- 148: Bruchstege
- 149: Stützfüße

- 151: Dorne; Öffnungselemente
- 152: Prismen; Öffnungselemente

- 155: Unterseite
- 156: Füße, vier

## Patentansprüche

1. Dübel zur Verwendung in einer mit einer oberen (101) und unteren Deckplatte (111) ausgestatteten Leichtbauplatte (100) aus einem mit einem Boden (140) versehenen Zylinderkörper (10), einem Verdrängerkörper (50) und einem mit Sollbruchstellen ausgestatteten Klebstoffbehälter (40), wobei der Zylinderkörper (10) mindestens zwei Hintergriffselemente (22) aufweist, die durch das Einschieben des Verdrängerkörpers (50) in eine Bohrung (130) der Leichtbauplatte (100), die obere Deckplatte (101) hintergreifend, aufgespreizt werden und wobei der Klebstoffbehälter (40) in einem mit mehreren Öffnungen (16, 39, 142, 143) versehenen Innenraum (17) des Zylinderkörpers (10) sitzt, **dadurch gekennzeichnet,**
- **dass** der Klebstoffbehälter (40) mindestens zwei Kammern (46, 47) aufweist, und
- **dass** der Klebstoffbehälter (40) eine obere Öffnung (1), eine untere Öffnung (2) und einen zerstörbaren Zwischenboden hat, wobei die obere (1) und die untere Öffnung (2) jeweils mit einer dünnwandigen, zerstörbaren Folie (42, 43) verschlossen ist.

2. Dübel gemäß Anspruch 1, **dadurch gekennzeichnet, dass** der Klebstoffbehälter (40) ein zumindest annähernd zylindrisches Rohr (41) ist, das an seinen Stirnseiten mit gas- und flüssigkeitsdichten Folien (42, 43) verschlossen ist.

3. Dübel gemäß Anspruch 2, **dadurch gekennzeichnet, dass** die gas- und flüssigkeitsdichten Folien (42, 43) und der Zwischenboden (44) eine Reißfestigkeit haben, die unter 10 N/mm² liegt.

4. Dübel gemäß Anspruch 1, **dadurch gekennzeichnet, dass** der Zwischenboden (44) parallel zu den dünnwandigen Folien (42, 43) ausgerichtet ist.

5. Dübel gemäß Anspruch 1, **dadurch gekennzeichnet, dass** der Zylinderkörper (10) aus einem Rohrabschnitt (11) und einem Boden (140) besteht.

6. Dübel gemäß Anspruch 1, **dadurch gekennzeichnet, dass** der Klebstoffbehälter (40) - im Handelszustand - im Innenraum (17) des Zylinderkörpers (10) zwischen den Anschlägen (33) und (147) positioniert ist.

7. Dübel gemäß Anspruch 1, **dadurch gekennzeichnet, dass** - im Handelszustand - oberhalb des Klebstoffbehälters (40) der Verdrängerkörper (50) kraft-, form- oder stoffschlüssig im Zylinderkörper (10) positioniert ist.

8. Dübel gemäß Anspruch 1, **dadurch gekennzeichnet, dass** der Verdrängerkörper (50) an seiner unteren Stirnfläche (83) Öffnungselemente (73, 84) trägt, die gegen die obere Deckfolie (42) des Klebstoffbehälters (40) ausgerichtet sind.

9. Dübel gemäß Anspruch 1, **dadurch gekennzeichnet, dass** im montierten Zustand die obere Stirnfläche (51) des Verdrängerkörpers (50) zumindest annähernd bündig mit der außen liegenden Oberfläche (102) der oberen Deckplatte (101) abschließt.

10. Dübel gemäß Anspruch 1, **dadurch gekennzeichnet, dass** der Klebstoffbehälters (40) mit einem einkomponentigen feuchtigkeitshärtenden Reaktionskleber auf Polyurethanbasis befüllt ist.

## Claims

1. A plug (anchor) for use in a light-weight building board (100) provided with a top cover panel (101) and a bottom cover panel (111), said plug consisting of a cylindrical body (10) having a bottom panel (140), of a displacement body (50) and of an adhesive reservoir (40) provided with predetermined braking points, said cylindrical body (10) having at least two engagement elements (22) which are spread by displacement body (50) being introduced in a borehole (130) in light-weight building board (100) and engaging behind top cover panel (101), and said adhesive reservoir (40) being seated in a cavity (17) of cylindrical body (10), said cavity provided with a plurality of openings (16, 39, 142, 143), **characterized in that**
- the adhesive reservoir (40) having at least two chambers (46, 47) and
- the adhesive reservoir (40) having an upper opening (1), a lower opening (2) and a rupturable intermediate separating wall, the upper and the lower openings (1, 2) being closed each by a thin, rupturable foil (42, 43).

2. Plug as claimed in claim 1, **characterized in that** adhesive reservoir (40) comprises an at least approximately cylindrical tube (41) sealed at its end faces by foils (42, 43) in a gasand liquid-tight relationship.

3. Plug as claimed in claim 2, **characterized in that** said gasand liquid-tight foils (42, 43) and the intermediate seperating wall (44) have a tear strength lower than 10 N/mm².

4. Plug as claimed in claim 1, **characterized in that** intermediate seperating wall (44) extends parallel to said thin foils (42, 43).

5. Plug as claimed in claim 1, **characterized in that** cylindrical body (10) consists of a tubular section (11) and a bottom panel (140).

6. Plug as claimed in claim 1, **characterized in that**, in its commercial condition, adhesive reservoir (40) is positioned inside cavity (17) of cylindrical body (10) between stops (33) and (147).

7. Plug as claimed in claim 1, **characterized in that**, in the commercial condition of said plug (anchor), displacement body (50) is seated in cylindrical body (10) above adhesive reservoir (40) in a force-locked, a shape-locked or in a material-to-material bonded relationship.

8. Plug as claimed in claim 1, **characterized in that** displacement body (50) has on its bottom end face (83) opening elements (73, 84) directed against top foil (42) of adhesive reservoir (40).

9. Plug as claimed in claim 1, **characterized in that**, in the mounted position, top end face (51) of displacement body (50) terminates substantially flush with the outer surface (102) of top cover panel (101).

10. Plug as claimed in claim 1, **characterized in that** adhesive reservoir (40) is filled with a single-component moisture hardening reaction adhesive on a polyurethane basis.

## Revendications

1. Cheville destinée à être utilisée dans une plaque de construction légère (100) équipée d'une plaque de recouvrement supérieure (101) et d'une plaque de recouvrement inférieure (111), composée d'un corps cylindrique (10) muni d'un fond (140), d'un corps déplaceur (50) et d'un récipient de colle (40) comportant des emplacements de rupture de référence, le corps cylindrique (10) présentant au moins deux éléments de prise arrière (22) qui, par l'introduction du corps déplaceur (50) dans une forure (130) dans la plaque de construction légère (100), s'écartent derrière la plaque de recouvrement supérieure (101), le récipient de colle (40) se trouvant dans un espace intérieur (17) pourvu de plusieurs ouvertures (16, 39, 142, 143) du corps cylindrique (10), **caractérisée en ce**
- **que** le récipient de colle (40) présente au moins deux chambres (46, 47) et
- **que** le récipient de colle (40) dispose d'une ouverture supérieure (1), d'une ouverture inférieure (2) et d'un fond intermédiaire, les ouvertures supérieure (1) et inférieure (2) chacune étant fermées par des feuilles minces rupturables (42, 43).

2. Cheville selon la revendication 1, **caractérisée en ce que** le récipient de colle (40) est un tube au moins approximatif cylindrique (41) dont les faces frontales sont fermées par des feuilles étanches aux gaz et aux liquides (42, 43).

3. Cheville selon la revendication 2, **caractérisée en ce que** les feuilles étanches aux gaz et aux liquides (42, 43) et le fond intermédiaire (44) présentent une résistance à la déchirure inférieure à 10 N/mm².

4. Cheville selon la revendication 1, **caractérisée en ce que** le fond intermédiaire (44) est orienté parallèlement aux
feuilles minces (42, 43).

5. Cheville selon la revendication 1, **caractérisée en ce que** le corps cylindrique (10) est constitué d'un tronçon de tube (11) et d'un fond (140).

6. Cheville selon la revendication 1, **caractérisée en ce que** le récipient de colle (40) à l'état d'usage dans le commerce est positionné à l'intérieur (17) du corps cylindrique (10) entre les butées (33) et (147).

7. Cheville selon la revendication 1, **caractérisée en ce que** le corps déplaceur (50), à l'état d'usage dans le commerce, étant fixé par force, par complémentarité de forme ou par adhésion par matière au-dessus du récipient de colle (40) dans le corps cylindrique (10).

8. Cheville selon la revendication 1, **caractérisée en ce que** le corps déplaceur (50), à sa face frontale inférieure (83), étant pourvu d'éléments d'ouverture (73, 84) orientés vers la partie supérieure (42) du récipient de colle (40).

9. Cheville selon la revendication 1, **caractérisée en ce que** la face frontale supérieure (51) du corps déplaceur (50), dans la position monté, est tout au moins à peu près en affleurement avec la surface extérieure (102) de la plaque de recouvrement extérieure (101).

10. Cheville selon la revendication 1, **caractérisée en ce que** le récipient de colle (40) est rempli d'une colle réactive monocomposante durcissable à l'humidité à base de polyuréthane.
